# EUROPÄISCHE PATENTSCHRIFT

(11) **EP 3 822 063 B1**
(45) Veröffentlichungstag und Bekanntmachung des Hinweises auf die Patenterteilung: **27.09.2023**
(21) Anmeldenummer: 19209200.5
(22) Anmeldetag: 14.11.2019
(51) Int. Cl.: B29C 64/10, B29C 64/393, B33Y 50/02

(54) **QUALITÄTSÜBERWACHUNG AN 3D-DRUCKERN**
QUALITY MONITORING ON 3D PRINTERS
SURVEILLANCE DE LA QUALITÉ DES IMPRIMANTES 3D

(43) Veröffentlichungstag der Anmeldung: 19.05.2021
(73) Patentinhaber: manroland Goss web systems GmbH, 86153 Augsburg (DE); grapho metronic Mess- und Regeltechnik GmbH, 81669 München (DE)
(72) Erfinder: Kratochwill, Jürgen, 81829 München (DE); Schönert, Michael, 86150 Augsburg (DE)

(56) Entgegenhaltungen:
- WO-A1-2016/209233
- CN-A- 108 638 497
- KR-A- 20170 130 944
- US-B1- 6 459 951

## Beschreibung

Die Erfindung betrifft ein Verfahren zur optischen Überwachung eines mittels eines 3D-Druckverfahrens hergestellten Bauteiles, wobei bei dem 3D-Druckverfahren ein Werkstoff mittels mindestens eines Druckkopfes als ein Auftrag auf dem in Entstehung befindlichen Bauteil schichtweise abgelegt wird, wobei der Auftrag mittels mindestens einer Kamera optisch erfasst und mit einer geometrischen Sollvorgabe abgeglichen wird, wobei der Auftrag von der mindestens einen Kamera mittels mindestens einer optischen Umlenkeinrichtung erfasst wird, wobei die mindestens eine optische Umlenkeinrichtung derart angeordnet wird, dass diese eine definierte, während eines Druck- und/oder Scanvorganges unveränderliche Position zum Druckkopf einnimmt und zur Ausführung einer Relativbewegung gegenüber dem Bauteil angeordnet wird. Die Erfindung betrifft ferner einen 3D-Drucker zur Herstellung eines Bauteiles, wobei das Bauteil durch schichtweises Ablegen eines Werkstoffes mittels eines Druckkopfes in Form eines Auftrages herstellbar ist, wobei der 3D-Drucker mindestens eine Kamera zur optischen Überwachung des Auftrages umfasst, wobei der 3D-Drucker mindestens eine optische Umlenkeinrichtung zur indirekten optischen Erfassung des Auftrages durch die mindestens eine Kamera umfasst, wobei die mindestens eine optische Umlenkeinrichtung ortsfest am oder ortsfest zum Druckkopf angeordnet ist.

Aus dem Stand der Technik sind unterschiedliche 3D-Druckverfahren, auch additive Fertigung, additive manufacturing, generative Fertigung oder Rapid-Technologien genannt, bekannt, wobei sich diese in ihrer Funktionsweise als auch in den jeweils verwendeten Materialien deutlich voneinander unterscheiden. Alle 3D-Druckverfahren haben jedoch das gemeinsame Merkmal, dass die von ihnen hergestellten Bauteile schichtweise beziehungsweise schicht- und zeilenweise aufgebaut werden.

Weit verbreitet sind 3D-Druckverfahren, bei welchen der Werkstoff auf das schichtweise entstehende Bauteil von mindestens einem Druckkopf in Form eines Auftrages aufgebracht wird. Dieser Auftrag ist beispielsweise beim Fused Deposition Modeling (FDM) oder beim Fused Filament Fabrication-Verfahren (FFF) ein in dem Druckkopf aufgeschmolzener thermoplastischer Kunststoff, der im flüssigen oder pastösen und somit fluidartigen Zustand als mehr oder weniger wulstartiger oder raupenförmiger Auftrag an den bezüglich der vorgesehenen Kontur des fertigen Bauteiles erforderlichen Stellen aufgetragen wird und durch Abkühlung erhärtet und aushärtet, oder beim Multi-Jet Modeling bzw. Poly-Jet Modeling entweder ebenfalls thermoplastische Kunststoffe oder photopolymere Kunststoffe, die als Monomere im fließfähigen und somit fluidartigen Zustand als mehr oder weniger wulstartiger oder raupenförmiger Auftrag an den bezüglich der vorgesehenen Kontur des fertigen Bauteiles erforderlichen Stellen aufgetragen wird und durch Bestrahlung durch beispielsweise UV-Licht polymerisieren und somit aushärten.

Bei derartigen 3D-Druckverfahren, bei welchen der Werkstoff in fluidartigem Zustand an den von der Endgeometrie des Bauteiles abhängigen Stellen zu einem Bauteil zeilen- und/oder schichtförmig aufgetragen werden, besteht jedoch die Gefahr, dass Fehldrucke wie beispielsweise ein unbeabsichtigter nicht durchgängiger Auftrag an einer Stelle erfolgt, an welcher ein Auftrag erfolgen müsste, oder dass der Auftrag zwar an der vorgesehenen Stelle erfolgt, der üblicherweise wulst- oder raupenförmige Auftrag des entsprechenden Werkstoffes je Druckkopf oder Düse jedoch aufgrund von Blasen, Einschlüssen oder partiell ungenügendem Materialaustoß nicht die Kontur aufweist, welcher der ansonsten üblicherweise wulst- oder raupenförmige Auftrag aufweisen sollte.

Erfolgt der Auftrag von Werkstoff an Stellen, an denen aufgrund der Geometrie des zu fertigenden Bauteils kein Auftrag erfolgen sollte, so ist dies aufgrund der Abweichungen zwischen der tatsächlichen Ist-Geometrie und der vorgegebenen Sollgeometrie des zu fertigenden Bauteils üblicherweise relativ einfach nachweisbar, wenngleich zumeist erst nach eventuell zeitaufwändiger und kostenintensiver Fertigstellung des Bauteiles.

Wird jedoch der Werkstoff unbeabsichtigt und somit unerkannt nicht an den erforderlichen Stellen oder nicht in ausreichender und somit nicht in fehlerfreier Art und Weise an allen erforderlichen Stellen aufgetragen, so lassen sich derartige Fehler wie Fehlstellen, Lücken, Blasen, Lufteinschlüsse etc. nach Fertigstellung des Bauteiles nur durch aufwändige, zerstörungsfreie Prüfverfahren wie die Röntgenprüfung oder die Ultraschallprüfung feststellen.

Insbesondere für Bauteile mit erforderlichem Qualitätsnachweis bedeutet dies im Falle schadhafter Bauteile einen doppelten Kostenanfall, nämlich die in jedem Fall erforderliche zeit- und kostenintensive Fertigstellung des Bauteiles als auch die sehr aufwendige zerstörungsfreie Werkstoffprüfung nach der Fertigstellung des Bauteiles.

Die WO 2016/209 233 A1 offenbart eine Vorrichtung zum 3D-Druck mit einem beweglichen Auftragskopf, wobei an dem Auftragskopf eine optische Umlenkeinrichtung als auch eine Kamera zur Erfassung der Wärmestrahlung als auch des sichtbaren Lichts angebracht ist.

Aus der US 6 459 951 B1 ist eine Vorrichtung und ein Verfahren zum Aufschmelzen eines metallischen Werkstoffes mittels einem Laser bekannt, wobei zur Bildung eines Auftrages der Aufschmelzstelle Metallpulver zugegeben wird, wobei der Laser, die Auftragsvorrichtung für das Metallpulver, die optischen Umlenkeinrichtungen als auch die Kamera ortsfest sind und die Veränderung des Auftragsortes über die Bewegung des Werkstückes erfolgt.

Die CN 108 638 497 A offenbart einen Knickarm-Roboter mit einem am Ende des Knickarmes angebrachten Druckkopf zum Aufbringen von aufgeschmolzenem Material, wobei zur Erfassung des Auftrages und des zu fertigenden Produktes eine Kamera mittels einer Halterung fest mit dem Druckkopf verbunden ist, wobei zur Sicherstellung unterschiedlicher Blickwinkel der Kamera der Druckkopf mitsamt der Kamera koaxial um die Mittelachse des Druckkopfes gedreht werden kann.

Die KR 2017 0130 944 A offenbart einen 3D-Drucker mit beweglichem Druckkopf, welcher in Wirkverbindung mit einem drehbaren Arbeitstisch steht, wobei durch die Drehung des Arbeitstisches eine Mehrzahl von Produkten auf diesem abgelegt werden kann, und wobei die Herstellung der Produkte im 3D-Druckverfahren mittels einer Kamera überwacht wird.

Der Erfindung liegt daher die Aufgabe zugrunde, ein Verfahren und eine Vorrichtung zu schaffen, mit welcher bereits während des 3D-Druckvorganges die Qualität des Auftrages und somit die Qualität des zu fertigenden Bauteiles überwacht werden kann, und hierzu handelsübliche Kameras verwendet werden können.

Diese Aufgabe wird durch ein Verfahren gemäß Anspruch 1 und durch eine Vorrichtung gemäß Anspruch 7 gelöst. Das erfindungsgemäße Verfahren beruht darauf, dass die mindestens eine Kamera ortsfest zu dem Bauteil angeordnet wird und wobei mit der mindestens einen Kamera ein so großer Erfassungsbereich erfasst wird, so dass ein durch die optische Umlenkeinrichtung umgelenkter Lichtstrahl auch bei Bewegung des Druckkopfes erfasst werden kann. Die erfindungsgemäße Vorrichtung ist ein 3D-Drucker, wobei die mindestens eine Kamera ortsfest zu dem Bauteil angeordnet und, wobei mit der mindestens einen Kamera ein so großer Erfassungsbereich erfassbar ist, so dass ein durch die optische Umlenkeinrichtung umgelenkter Lichtstrahl auch bei Bewegung des Druckkopfes erfassbar ist.

Ein derartiges Verfahren und ein hierfür geeigneter 3D-Drucker haben den Vorteil, dass der Auftrag als auch die vollständige Aufbringung des Auftrages bereits während der Herstellung erfasst wird. Im Falle von schadhaften Stellen des Auftrages oder im Falle von schadhaften Stellen im Auftrag kann somit der gegebenenfalls zeitaufwendige und teure Herstellungsprozess abgebrochen werden, sofern eine Reparatur der schadhaften Stellen nicht möglich ist.

Des Weiteren kann eine aufwendige und somit teure zerstörungsfreie Bauteilprüfung entfallen, mit denen derartige Fehlstellen detektiert werden können.

Gemäß einer Ausgestaltung der Erfindung wird der Auftrag durch mindestens eine Kamera erfasst, welche oberhalb und/oder schräg oberhalb und/oder seitlich von dem Bauteil positioniert wird.

Diese Ausgestaltung weist den Vorteil auf, dass das zu fertigende Bauteil aus mindestens einer Perspektive erfasst wird, aus welcher die Geometrie des Auftrages hinsichtlich seines korrekten Auftragungsortes als auch hinsichtlich der Geometrie des Auftrages selbst erfasst wird, so dass ein Abgleich der erfassten Kontur mit der zu diesem Zeitpunkt des Fertigungsprozesses erforderlichen Soll-Geometrie möglich ist. Unbeabsichtigte Fehlstellen des Auftrages oder im Auftrag selbst werden hierbei als Abweichungen von der Sollgeometrie erkannt und entsprechend ausgegeben.

Gemäß der Erfindung wird der Auftrag von der mindestens einen Kamera mittels mindestens einer optischen Umlenkeinrichtung und somit indirekt erfasst. Eine derartige Ausgestaltung weist eine Mehrzahl von Vorteilen auf: Zum einen kann somit eine nahezu beliebig große Kamera verwendet werden, da die Kamera nicht unmittelbar am Druckkopf oder im Bereich des Druckkopfes angebracht werden muss. Des Weiteren herrschen insbesondere bei 3D-Druckern, die beispielsweise nach dem FDM-Verfahren arbeiten und den Werkstoff im Bereich des Druckkopfes aufschmelzen oder dort im geschmolzenen Zustand verfügbar halten müssen, im Bereich um den Druckkopf und oberhalb des Druckkopfes relativ hohe Temperaturen von bis zu in etwa 300°C, welche die Funktionsweise von handelsüblichen Kameras, wie beispielsweise CCD-Kameras für gewerbliche Anwendungen mindestens beeinträchtigen.

Durch den Einsatz von mindestens einer optischen Umlenkeinrichtung ist es somit möglich, dass der Auftrag unmittelbar im Bereich des Druckkopfes optisch erfasst und entsprechend ausgewertet wird.

Hierzu ist die mindestens eine optische Umlenkeinrichtung derart angeordnet, dass diese eine definierte, während des Druck- und/oder Scanvorganges unveränderliche Position zum Druckkopf einnimmt und zur Ausführung einer Relativbewegung gegenüber dem Bauteil angeordnet wird. Dadurch ist eine Erfassung der Ist-Geometrie des Auftrages unmittelbar an einem Druckkopf möglich, was insbesondere bei 3D-Druckern mit einer Mehrzahl von nebeneinander oder hintereinander angeordneten Druckköpfen von Vorteil ist, da dort ein erster Auftrag bereits nach relativ kurzer Zeit von einem zweiten Auftrag überdeckt werden kann.

Als Scanvorgang wird hierbei bezeichnet, wenn der zuletzt aufgetragene Auftrag und/oder das Bauteil in einem gesonderten Durchlauf ohne gleichzeitiges Aufbringen von Werkstoff in Form eines Auftrages von der Kamera erfasst und somit gescannt wird. Zusätzlich oder alternativ hierzu ist es möglich, den Auftrag bereits während des Aufbringens von Werkstoff in Form eines Auftrages und somit bereits während des Druckvorganges mittels der Kamera zu erfassen.

Diese Ausführung ist insbesondere dann vorteilhaft, wenn der Druckkopf während des Fertigungsprozesses mindestens eine eindimensionale Bewegung ausführt. Weitere Ausgestaltungen der Erfindung können der nachfolgenden Figurenbeschreibung entnommen werden. Hierbei zeigt:
- Fig. 1: die wesentlichen Komponenten eines 3D-Druckers mit integrierter Kamera
- Fig. 2: die wesentlichen Komponenten eines 3D-Druckers mit im Bereich des Druckkopfes angeordneter optischer Umlenkeinrichtung und Kamera
- Fig. 3: die wesentlichen Komponenten eines 3D-Druckers mit im Bereich des Druckkopfes angeordneter optischer Umlenkeinrichtung und Kamera
- Fig. 4: die wesentlichen Komponenten eines 3D-Druckers mit einer Mehrzahl von optischen Umlenkeinrichtungen und Kameras
- Fig. 5: eine als Spiegel ausgestaltete optische Umlenkeinrichtung
- Fig. 6: eine als optisches Prisma ausgestaltete optische Umlenkeinrichtung
- Fig. 7: die wesentlichen Komponenten eines 3D-Druckers mit ortsfest zum Bauteil angeordneter optischer Umlenkeinrichtung und Kamera

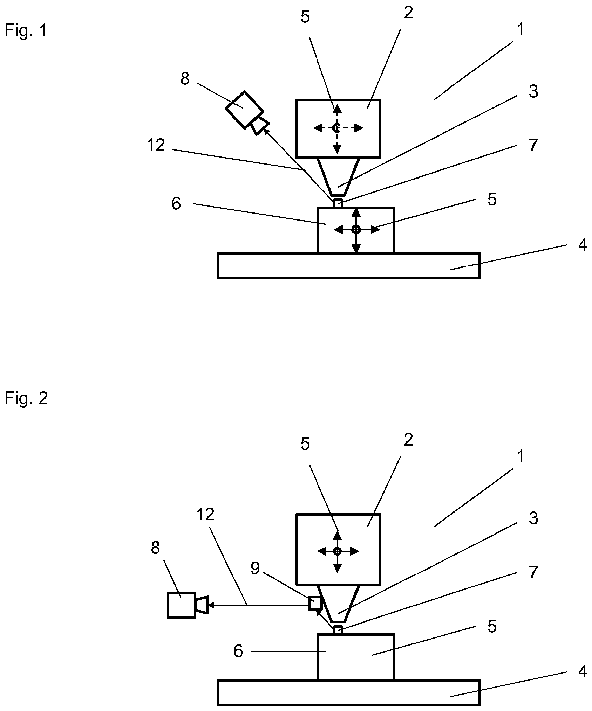

Fig. 1 zeigt die aus dem Stand der Technik bekannten und die für die vorliegende Erfindung relevanten wesentlichen Komponenten eines 3D-Druckers 1, nämlich das Druckbett 4, welches das zu fertigende Bauteil 6 aufnimmt. Oberhalb des Bauteiles 6 ist der Druckkopf 2 angeordnet, welcher mit einer Düse 3 den zumeist fluidartigen Werkstoff als zumeist und im Wesentlichen als wulst- oder raupenartigen Auftrag 7 schichtweise und innerhalb einer jeden Schicht punkt- und/oder zeilenweise auf das Bauteil 6 aufträgt. Die Komponenten, welche zum Halten und/oder Bewegen des Druckkopfes 2 als auch zum Halten und/oder Bewegen des Druckbettes 4 erforderlich sind, sind zur besseren Übersichtlichkeit in allen Figuren nicht dargestellt.

Abhängig von der Konzeption und Ausgestaltung des 3D-Druckers 1 können entweder der Druckkopf 2 oder das Druckbett 4 mindestens eine Bewegungsrichtung 5 ausführen, es sind aus dem Stand der Technik auch Konfigurationen bekannt, bei denen sowohl der Druckkopf 2 als auch das Druckbett 4 jeweils mindestens eine Bewegung ausführen. Aufgrund dieser unterschiedlichen Möglichkeiten, welche jedoch nicht den Kern der vorliegenden Erfindung betreffen, sind in Fig. 1 sowohl beim Druckkopf 2 als auch beim Bauteil 6 symbolisch Pfeile dargestellt, welche die möglichen Bewegungsrichtungen 5 zum Ausdruck bringen.

Der in Fig. 1 sinnbildlich dargestellte, aus dem Stand der Technik bekannte 3D-Drucker 1 ist der besseren Übersichtlichkeit wegen nur mit einem Druckkopf 2 dargestellt, welcher beispielhaft eine Düse 3 umfasst. Auch wenn in keiner der nachfolgenden Figuren dargestellt, so ist die Erfindung auch für 3D-Drucker 1 mit einer Mehrzahl von Druckköpfen 2 und/oder mit einer Mehrzahl von Düsen 3 je Druckkopf 2 anwendbar, da sich dadurch lediglich die Anzahl der gegebenenfalls gleichzeitig auftragbaren Aufträge 7 erhöht.

In Fig. 1 ist ferner eine Kamera 8 dargestellt, mit welcher insbesondere der Auftrag 7 als auch die dem Druckkopf 2 zugewandte Oberfläche des in Herstellung befindlichen Bauteiles 6 optisch erfasst werden kann. Diese Kamera 8 erfasst den Auftrag 7 entweder kontinuierlich oder aber getaktet, wobei die Taktung an die Vorschubgeschwindigkeit in der Arbeitsebene, an die Größe des Erfassungsbereiches als auch an die Auflösung angepasst ist und somit im Bereich von wenigen Millisekunden bis hin zu wenigen Sekunden liegt. Die Kamera 8 ist als Digitalkamera, beispielsweise mit einem CCD- oder CMOS-Sensor ausgestaltet und kann optional eine integrierte, in Fig. 1 nicht dargestellte Beleuchtungseinheit umfassen.

Der so optisch erfasste Auftrag 7 wird von der Kamera 8 in Form von Bildern erfasst, woraus sich die geometrische Form des Auftrages 7 über einen in Fig. 1 nicht dargestellten Überwachungsrechner herleiten lässt. Weist der Auftrag 7 Fehler auf wie Fehlstellen, Löcher, Blasen oder eine von der spezifizierten Breite und/oder Höhe des Auftrags 7 abweichende Breite und/oder Höhe, so kann dies von der Kamera 8 beziehungsweise von dem mit der Kamera 8 verbundenen, in Fig. 1 nicht dargestelltem Überwachungsrechner auf unterschiedliche Art und Weise erkannt werden. Denn zum einen ist es anhand der reinen Bilderkennung möglich, Abweichungen von einer geometrischen Sollausführung des Auftrages 7, welche der Kamera 8 oder dem damit verbundenen Überwachungsrechner angelernt wird, zu erkennen und als Fehler zu vermeiden. Vorzugsweise wird dem Überwachungsrechner bei dieser Ausgestaltung ein Signal zur Verfügung gestellt, zu welchem Zeitpunkt ein Auftrag 7 über die Düse 3 des Druckkopfes 2 auf das in Fertigung befindliche Bauteil 6 aufgetragen werden soll, um Fehlermeldungen bei beabsichtigtem Nichtaufbringen von Auftrag 7 beispielsweise bei Bohrungen oder Aussparungen zu vermeiden.

Zum anderen ist es auch möglich, den von der skalierbaren Kamera 8 optisch erfassten Auftrag 7 in eine geometrische Form oder Kontur umzurechnen, welche von dem Überwachungsrechner entsprechend überwacht wird, so dass bei Abweichungen der erfassten Geometrie umfassend Form und/oder Größe und/oder Oberflächenstruktur des auf das Bauteil 6 aufgebrachten Auftrages 7 von der Soll-Vorgabe außerhalb eines gewissen Toleranzbereiches eine Fehlermeldung generiert wird und/oder der Fertigungsprozess unterbrochen oder abgebrochen wird.

Des Weiteren besteht auch die Möglichkeit, nicht nur die Geometrie des Auftrages 7 selbst über die Form, Größe und Oberflächenstruktur des Auftrages 7 zu erfassen bzw. zu errechnen, sondern auch die geometrische Lage des Auftrages 7 auf dem Bauteil 6 zu einem jedem Zeitpunkt zu erfassen, so dass hierbei neben der Geometrie des Auftrages 7 als Form, Größe und der Oberflächenstruktur auch die geometrische Anordnung des Auftrages 7 auf dem Bauteil 6 ermittelt werden kann. Die Kamera 8 oder ein an die Kamera 8 angeschlossener Überwachungsrechner kann somit zu jedem Zeitpunkt die geometrische Kontur des in Fertigung befindlichen Bauteils 6 errechnen, welche mit der zu dem entsprechenden Zeitpunkt aus dem als elektronisches 3D-Modell des Bauteils 6 herleitbaren Soll-Geometrie abgeglichen werden kann.

Mit dieser Ausgestaltung lässt sich somit nicht nur die Kontur des Auftrages 7 überwachen, sondern es kann die gesamte Kontur des in Entstehung befindlichen Bauteiles 6 bereits während der teilweise sehr zeit- und kostenintensiven Fertigung auf Abweichungen zur geometrischen Soll-Kontur hin überprüft werden. Erfolgt ein Auftrag 7 an Stellen, an denen wegen Aussparungen, Bohrungen oder ähnlichem kein Auftrag 7 erfolgen soll, so kann dies bereits während der Fertigung erkannt werden, ebenso wie ein unbeabsichtigt erfolgter Nicht-Auftrag, welcher in Löchern, Lücken oder einer fehlerhaften Kontur resultiert.

Zusammengefasst kann somit durch die optische Erfassung des auf das Bauteil 6 aufgebrachten Auftrages 7 mittels einer Kamera 8 die Ausgestaltung des Auftrages 7 ermittelt und mittels einer geometrischen Sollvorgabe abgeglichen werden, so dass damit die Herstellung eines mittels einem 3D-Druckverfahren hergestellten Bauteiles 6 fortlaufend überwacht werden kann.

Diese Überwachung kann entweder nur die Geometrie des Auftrages 7 betreffen, wenn entweder das davon erfasste Bild anhand der Bildauswertung nach Abweichungen von geometrischen Merkmalen hin untersucht wird, oder wenn über die Bilddatenauswertung die geometrische Kontur des Auftrages 7 ermittelt und mit einer geometrischen Sollvorgabe des Auftrages 7 abgeglichen wird.

Darüber hinaus kann neben der geometrischen Struktur des Auftrages 7 auch die Lage und Ausdehnung des Auftrages 7 auf dem in Fertigung befindlichen Bauteil 6 ermittelt und mit der zu dem entsprechenden Zeitpunkt aus dem elektronischen 3D-Modell des Bauteils 6 abgeleiteten Soll-Geometrie abgeglichen werden, so dass in diesem Fall nicht nur die Geometrie des Auftrages 7, sondern die Geometrie des in Fertigung befindlichen Bauteils 6 zu jedem entsprechenden Zeitpunkt erfasst wird und mit der jeweiligen geometrischen Sollvorgabe abgeglichen werden kann.

In Fig. 1 ist eine beispielhafte Ausführung eines aus dem Stand der Technik bekannten 3D-Druckers 1 mit nur einer Kamera 8 dargestellt. Es ist jedoch auch möglich, das Bauteil 6 und/oder den mindestens einen Auftrag 7 mit einer Mehrzahl von Kameras 8 zu erfassen, um so entweder den Auftrag 7 und/oder das Bauteil 6 gleichzeitig mit einer Mehrzahl von Kameras 8 zur Erzielung eines 3-dimensionalen Abbildes oder mit mindestens jeweils einer Kamera 8 sequentiell zu erfassen. Letztere Variante wird vorzugsweise dann eingesetzt, wenn immer nur Teilbereiche der relevanten Bauteiloberfläche von einer Kamera 8 erfasst werden können.

Die mindestens eine in Fig. 1 dargestellte Kamera 8 kann gemäß dem Stand der Technik entweder ortsfest zum Druckkopf 2 oder ortsfest zum Bauteil 6 bzw. zum Druckbett 4 angeordnet sein, was maßgeblich davon abhängt, ob der Druckkopf 2 oder das Druckbett 4 die für die Fertigung erforderlichen Bewegungsrichtungen 5 insbesondere in Erstreckung der Arbeitsebene ausführt.

Das Erfassen des mindestens einen Auftrages 7 und/oder des Bauteiles 6 und somit die während der Fertigung fortlaufende Überwachung des Druckvorganges kann entweder unmittelbar während des Druckvorganges erfolgen, oder die Überwachung der Geometrie des jeweiligen Auftrages 7 und/oder der Geometrie des jeweiligen Zustandes des Bauteiles 6 erfolgt in einem gesonderten Scanvorgang nach Beendigung eines jeden schichtförmigen Auftrages 7.

Es ist selbstverständlich auch möglich, die Geometrie des Auftrages 7 und/oder des Bauteiles 6 während des Fertigungsvorganges zu überwachen und nach dem Aufbau einer oder mehrerer Schichten einen gesonderten Scanvorgang durchzuführen.

Dies hängt insbesondere, wenngleich nicht ausschließlich, von der Geometrie und der Einsehbarkeit des Auftrages 7 und/oder des Bauteiles 6 ab. So kann bei schlecht einsehbaren Platzverhältnisses der Druckkopf 2 und/oder das Bauteil 6 so verfahren werden, dass die zuletzt aufgebaute Schicht des Auftrages 7 frei einsehbar ist und von der mindestens einen Kamera 8 uneingeschränkt erfasst werden kann.

Die mindestens eine Kamera 8 ist somit wie in Fig. 1 beispielhaft dargestellt, oberhalb und/oder schräg oberhalb in Bezug auf das Druckbett 4 zum Bauteil angeordnet und/oder seitlich von dem Bauteil positioniert, um so mindestens den Auftrag 7 optisch erfassen zu können. Insbesondere wenn die Erfassung des Auftrages 7 und/oder des Bauteils 6 nicht während des Druckvorgangs, sondern in einem gesonderten Scanvorgang erfolgt, kann die mindestens eine Kamera 8 hierzu auch in eine von der Ruheposition einer Kamera 8 in eine davon abweichende Erfassungsposition gebracht werden, um eine bestmögliche Erfassung des Auftrages 7 und/ oder des Bauteils 6 hinsichtlich Blickwinkel und Abstand zum Bauteil 6 zu ermöglichen.

In den Figuren 1 bis 7 ist eine Beleuchtung nicht gesondert dargestellt oder angeführt, falls jedoch zur ausreichenden Ausleuchtung des Auftrages 7 und/oder des Bauteiles 6 eine gesonderte Beleuchtung erforderlich ist, so kann diese zusätzlich zu den in den Figuren dargestellten Komponenten angebracht werden. Es ist auch möglich, eine Beleuchtung in die mindestens eine Kamera 8 zu integrieren.

Fig. 2 zeigt beispielhaft die Erfindung, bei welcher der auf das Bauteil 6 aufgebrachte Auftrag 7 optisch nicht unmittelbar von der mindestens einen Kamera 8 erfasst wird, sondern dass der Auftrag 7 mittelbar von der mindestens einen Kamera 8 erfasst wird, wobei die vom Auftrag 7 und/oder Bauteil 6 zurückreflektierten Lichtstrahlen 12 mittels mindestens einer optischen Umlenkeinrichtung 9 erfasst und zu der mindestens einen Kamera 8 umgelenkt werden.

Die mindestens eine Kamera 8 erfasst somit die vom Auftrag 7 und/oder Bauteil 6 reflektierten Lichtstrahlen 12 indirekt mittels mindestens einer optischen Umlenkeinrichtung 9. Die aus diesen erfassten Bildern abgeleitete Überwachung des Auftrages 7 und/oder des in Fertigung befindlichen Bauteiles 6 erfolgt dann identisch zur oben angeführten Vorgehensweise bei direkter optischer Erfassung des Auftrages 7 und/oder des in Fertigung befindlichen Bauteiles 6 durch die mindestens eine Kamera 8, gegebenenfalls ist nur die durch die optische Umlenkung erfolgte Drehung oder Spiegelung des Bildes zu berücksichtigen.

Auch ist es bei Verwendung von mindestens einer optischen Umlenkeinrichtung 9 möglich, die Überwachung des Auftrages 7 und/oder des Bauteiles 6 direkt während des Druckvorganges und/oder in einem gesonderten Scanvorgang nach Beendigung eines schichtweisen Auftrages 7 durchzuführen.

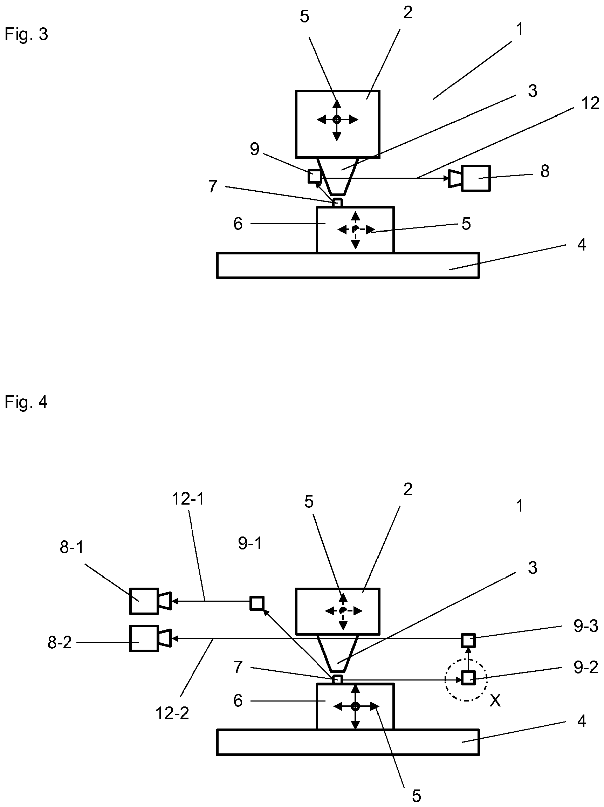

In Fig. 2 als auch in Fig. 3 sind beispielhafte Ausführungen mit jeweils einer optischen Umlenkeinrichtung 9 dargestellt. Wenngleich nicht zeichnerisch ausgeführt, so ist es analog der Erfassung des Auftrages 7 und/oder des Bauteils 6 unmittelbar mit einer Kamera 8 möglich, auch eine Mehrzahl von optischen Umlenkeinrichtungen 9 zur Erfassung des Auftrages 7 und/oder Bauteils 6 zu verwenden.

Eine optische Umlenkeinrichtung 9 kann entweder als mindestens ein Spiegel 10 oder als mindestens ein optisches Prisma 11 ausgebildet sein. Es ist grundsätzlich auch möglich, eine optische Umlenkeinrichtung 9 als eine Kombination von mindestens einem Spiegel 10 und mindestens einem optischen Prisma 11 auszugestalten. Mindestens bei Einsatz einer Mehrzahl von optischen Umlenkeinrichtungen 9 kann somit eine Kombination von mindestens einem Spiegel 10 und mindestens einem optischen Prisma 11 möglich oder sinnfällig sein.

Die Figuren 2 und 3 zeigen jeweils eine beispielhafte Ausgestaltung der Erfindung, bei welcher die eine dargestellte optische Umlenkeinrichtung 9 in der Form angeordnet ist, so dass diese eine definierte, während des Druck- und/oder Scanvorganges unveränderliche Position zum Druckkopf 2 einnimmt und somit mitsamt dem beweglich angeordneten Druckkopf 2 eine Relativbewegung gegenüber dem Bauteil 6 ausführt.

Wie anhand der in den Figuren 2 und 3 sinnbildlich dargestellten Bewegungsrichtungen 5 des Druckkopfes 2 kommt eine derartige Ausgestaltung vorzugsweise, wenngleich nicht ausschließlich, bei 3D-Druckern 1 zum Einsatz, bei welchen die Mehrzahl der Bewegungsrichtungen 5 vom Druckkopf 2 ausgeführt werden, da somit der Auftrag 7 und somit das in Fertigung befindliche Bauteil 6 optisch sehr nahe am Druckkopf 2 beziehungsweise an der Düse 3 erfasst werden kann, da eine derartige optische Umlenkeinrichtung 9 in der Regel eine sehr viel kleinere Baugröße als eine Kamera 8 aufweist und bei entsprechender Ausführung auch den hohen Umgebungstemperaturen im Bereich des Druckkopfes 2 bei im Schmelzverfahren arbeitenden 3D-Druckern 1 ohne Einschränkungen standhält.

Bei der in Fig. 2 dargestellten beispielhaften Ausgestaltung lenkt die optische Umlenkeinrichtung 9 den sinnbildlich dargestellten Lichtstrahl 12 nur in der Zeichnungsebene um, so dass der sinnbildlich dargestellte Lichtstrahl 12 im Wesentlichen auf die Seite des Druckkopfes 2 ausgelenkt wird, auf der sich die optische Umlenkeinrichtung 9 befindet.

In Fig. 3 ist hingegen eine beispielhafte Ausführung dargestellt, bei welcher der sinnbildlich dargestellte Lichtstrahl 12 sowohl in der Zeichnungsebene als auch in Richtung senkrecht zur Zeichnungsebene umgelenkt wird, das heißt, dass beispielsweise bei Einsatz eines Spiegels 10 als optische Umlenkeinrichtung 9 die durch den Spiegel 10 aufgespannte Ebene sowohl zur Betrachtungsebene als auch senkrecht dazu geneigt ist.

Durch eine derartige Anordnung der optischen Umlenkeinrichtung 9 kann somit der sinnbildlich dargestellte Lichtstrahl 12 auch auf die Seite in Bezug auf den Druckkopf 2 umgelenkt werden, welcher der Seite der Anbringung der optischen Umlenkeinrichtung 9 abgewandt ist. Durch entsprechende Variation der Anordnung der optischen Umlenkeinrichtung 9 kann somit der sinnbildlich dargestellte Lichtstrahl 12 in nahezu jede beliebige Richtung in Bezug auf den Druckkopf 2 umgelenkt werden, was die Variabilität der Anordnung der mindestens einen Kamera 8 erheblich erhöht.

Damit der von der mindestens einen optischen Umlenkeinrichtung 9 umgelenkte Lichtstrahl 12 auch bei Bewegung des Druckkopfes 2 erfasst werden kann, kann entweder der Erfassungsbereich der mindestens einen Kamera 8 entsprechend groß gestaltet werden, was insbesondere bei relativ kleinen Arbeitsbereichen des 3D-Druckers 1 möglich ist.

Es ist aber auch möglich, die mindestens eine Kamera 8 nachführbar, beispielsweise durch Ermöglichung einer Schwenkbewegung, auszugestalten oder aber die mindestens eine Kamera 8 in ortsfester Position, wenngleich in entsprechend gro-ßem Abstand zum Druckkopf 2 anzubringen. Somit kann eine Kamera 8 in einem Bereich angebracht werden, in welchem ausreichend Bauraum zur Verfügung steht und für die Kamera 8 verträgliche Umgebungsparameter herrschen.

Fig. 4 zeigt beispielhaft eine Ausgestaltung der Erfindung, bei welcher der Auftrag 7 und/oder das Bauteil 6 mittels einer Mehrzahl von Kameras 8 erfasst wird, wobei sowohl die erste Kamera 8-1 als auch die zweite Kamera 8-2 die sinnbildlich dargestellten Lichtstrahlen 12 jeweils indirekt in der Form erfassen, als dass diese jeweils mittels mindestens einer optischen Umlenkeinrichtung 9 umgelenkt werden. So wird ein sinnbildlich dargestellter erster Lichtstrahl 12-1 mittels einer ersten Umlenkeinrichtung 9-1 umgelenkt und einer ersten Kamera 8-1 zur Erfassung des Auftrages 7 und/oder des Bauteiles 6 zur Überwachung deren Geometrie zugeleitet.

Ein zweiter sinnbildlich dargestellter Lichtstrahl 12-2 wird beispielhaft über eine Mehrzahl von optischen Umlenkeinrichtungen 9, umfassend eine zweite optische Umlenkeinrichtung 9-2 und eine dritte optische Umlenkeinrichtung 9-3, in der Form umgelenkt, dass diese von einer zweiten Kamera 8-2 erfasst werden. Die erste Kamera 8-1 und die zweite Kamera 8-2 sind auf derselben Seite des Druckkopfes 2 angeordnet und können dank dieser Ausgestaltung den Auftrag 7 und/oder das Bauteil 6 aus zwei unterschiedlichen Perspektiven erfassen.

Für die in Fig. 4 dargestellte Ausgestaltung können die optischen Umlenkeinrichtungen 9 derart angeordnet sein, dass diese eine definierte, während des Druck- und/oder Scanvorganges unveränderliche Position zum Druckkopf 2 einnehmen und zur Ausführung einer Relativbewegung gegenüber dem Bauteil 6 angeordnet sind.

Es ist aber auch möglich, wenngleich nicht Bestandteil der vorliegenden Erfindung, die mehreren optischen Umlenkeinrichtungen 9 derart anzuordnen, dass diese eine definierte, während des Druck- und/oder Scanvorganges unveränderliche Position zum Bauteil 6 einnehmen und zur Ausführung einer Relativbewegung gegenüber dem Druckkopf 2 angeordnet sind.

Es ist jedoch auch eine nicht erfindungsgemäße Kombination aus beiden vorgenannten Varianten denkbar, als dass mindestens eine optische Umlenkeinrichtung 9, beispielsweise die erste optische Umlenkeinrichtung 9-1 ortsfest zum Bauteil 6 und eine weitere optische Umlenkeinrichtung 9, beispielsweise der Verbund aus zweiter optischer Umlenkeinrichtung 9-2 und dritter optischer Umlenkeinrichtung 9-3 ortsfest zum Druckkopf 2 angebracht werden und somit mit dem Druckkopf 2 bewegt werden.

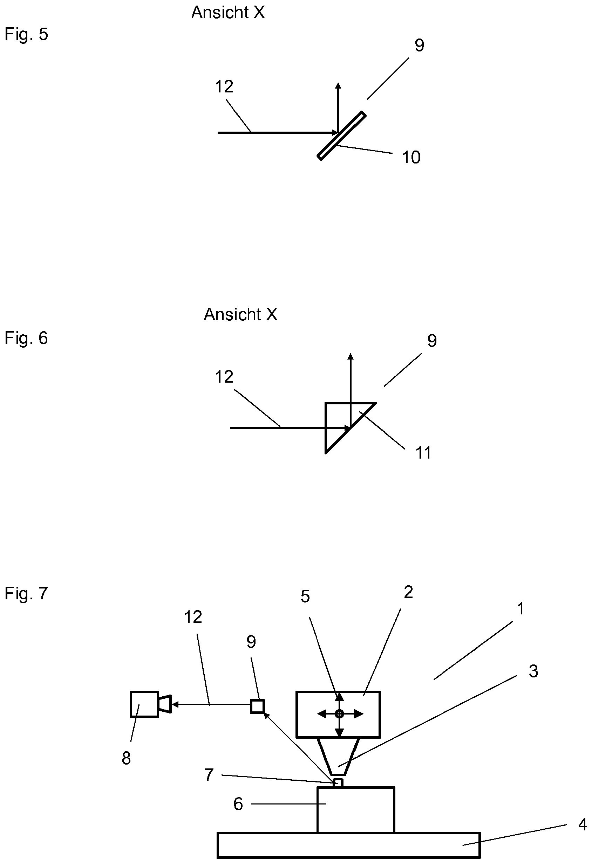

Fig. 5 zeigt die Detailansicht X aus Fig. 4 und bildet eine mögliche Ausführung einer optischen Umlenkeinrichtung 9 ab, bei welcher die optische Umlenkeinrichtung 9 als ein Spiegel 10 ausgebildet ist. Derartige Spiegel 10 können aus beschichtetem Glas, Keramik oder vergleichbaren Werkstoffen hergestellt werden. Es ist auch möglich, diesen aus poliertem und/oder beschichtetem Metall wie beispielsweise hochlegiertem, rostfreien Stahl herzustellen. Somit können derartige Spiegel 10 allen Umgebungsbedingungen wie insbesondere hohen Temperaturen im Bereich des Druckkopfes 2 standhalten und sind im Falle der Verschmutzung bei Anordnung im Bereich des Druckkopfes 2 einfach und kostengünstig zu reinigen oder zu ersetzen. Ein derartiger Spiegel 10 kann entweder wie in Fig. 5 dargestellt, als planer Spiegel 10 ohne eine optische Vergrößerung oder Verkleinerung oder, wie nicht in Fig. 5 dargestellt, als konvexer oder konkaver Spiegel 10 mit einem Vergrößerungs- oder Verkleinerungseffekt ausgeführt werden.

Fig. 6 zeigt die Detailansicht X aus Fig. 4 und bildet eine mögliche Ausführung einer optischen Umlenkeinrichtung 9 ab, bei welcher die optische Umlenkeinrichtung 9 als ein optisches Prisma 11 ausgebildet ist. Derartige optische Prismen 11 bestehen in der Regel aus Glas oder Kunststoff. Somit können derartige Prismen 11 allen Umgebungsbedingungen wie insbesondere hohen Temperaturen im Bereich des Druckkopfes 2 standhalten und sind im Falle der Verschmutzung bei Anordnung im Bereich des Druckkopfes 2 relativ einfach und kostengünstig zu ersetzen.

Fig. 7 stellt eine weitere beispielhafte, nicht erfindungsgemäße Ausgestaltung dar, bei welcher die optische Umlenkeinrichtung 9 zwar entweder ortsfest zum Drucckopf 2 oder zum Bauteil 6 angeordnet ist, wobei jedoch der Spiegel 10 oder das optische Prisma 11 der optischen Umlenkeinrichtung 9 beweglich, insbesondere rotativ beweglich angeordnet ist, so dass die optische Umlenkeinrichtung 9 bei der in Fig. 7 schematisch dargestellten Ausgestaltung als ein Spiegelscanner oder Laserscanner ausgestaltet ist, wodurch der Auftrag 7 und/oder das in Herstellung befindliche Bauteil 6 zeilen- oder rasterartig mit einem Lichtstrahl 12, vorzugsweise mit einem Laserstrahl überstrichen wird, um so durch Erfassung des reflektierten Lichtes mit einer Kamera 8 den Auftrag 7 und/oder das Bauteil 6 als Bild abzubilden und/oder vermessen zu können.

Bei all den in den Figuren 2 bis 7 dargestellten Ausgestaltungen, bei welchen sinnbildlich ausgedrückt ein Lichtstrahl 12 mittels einer optischen Umlenkeinrichtung 9 zu einer Kamera 8 hin umgelenkt wird, ist es somit unerlässlich, dass mit einer jeden optischen Umlenkeinrichtung 9 ein Bereich erfasst wird oder erfasst werden kann, der wenigstens einer kleinsten Ausdehnung des Auftrages 7, insbesondere die kleinste Ausdehnung im Sinne der Breite des Auftrages 7 in Erstreckung der Arbeitsebene entspricht. So kann der Auftrag 7 in seiner Breite senkrecht zur Vorschubrichtung optisch erfasst werden, was eine Bewertung der Güte des Auftrages 7 und das Erkennen von Fehlern wie beispielsweise Fehlstellen, Lücken oder Blasen erleichtert.

Alternativ hierzu kann die mindestens eine optische Umlenkeinrichtung 9 einen Bereich, welcher im Wesentlichen der Ausdehnung eines größtmöglichen Bauteiles 6 entspricht, erfasst werden, so dass das Bauteil 6 mindestens auf die Bearbeitungsebene bezogen in seiner ganzen Erstreckung erfasst werden kann. Diese Lösung erfordert jedoch eine Kamera 8 mit sehr hoher Auflösung.

### Bezugszeichenliste

- 1: 3D-Drucker
- 2: Druckkopf
- 3: Düse
- 4: Druckbett
- 5: Bewegungsrichtungen
- 6: Bauteil
- 7: Auftrag
- 8: Kamera
- 9: optische Umlenkeinrichtung
- 10: Spiegel
- 11: optisches Prisma
- 12: Lichtstrahl

## Patentansprüche

1. Verfahren zur optischen Überwachung eines mittels eines 3D-Druckverfahrens hergestellten Bauteiles (6), wobei bei dem 3D-Druckverfahren ein Werkstoff mittels mindestens eines beweglich angeordneten Druckkopfes (2) als ein Auftrag (7) auf dem in Entstehung befindlichen Bauteil (6) schichtweise abgelegt wird, wobei der Auftrag (7) mittels mindestens einer Kamera (8) optisch erfasst und mit einer geometrischen Sollvorgabe abgeglichen wird, wobei der Auftrag (7) von der mindestens einen Kamera (8) mittels mindestens einer optischen Umlenkeinrichtung (9) erfasst wird, wobei die mindestens eine optische Umlenkeinrichtung (9) derart angeordnet wird, dass diese eine definierte, während eines Druck- und/oder Scanvorganges unveränderliche Position zum Druckkopf (2) einnimmt und zur Ausführung einer Relativbewegung gegenüber dem Bauteil (6) angeordnet wird, **dadurch gekennzeichnet, dass** die mindestens eine Kamera (8) ortsfest zu dem Bauteil (6) angeordnet wird und wobei mit der mindestens einen Kamera (8) ein so großer Erfassungsbereich erfasst wird, so dass ein durch die optische Umlenkeinrichtung umgelenkter Lichtstrahl (12) auch bei Bewegung des Druckkopfes (2) erfasst werden kann.

2. Verfahren nach Anspruch 1, **dadurch gekennzeichnet, dass** der Auftrag (7) durch mindestens eine Kamera (8), welche oberhalb und/oder schräg oberhalb und/oder seitlich von dem Bauteil (6) positioniert wird, erfasst wird.

3. Verfahren nach einem der Ansprüche 1 oder 2, **dadurch gekennzeichnet, dass** mit der optischen Umlenkeinrichtung (9) ein Bereich, welcher wenigstens einer kleinsten Ausdehnung des Auftrages (7) entspricht, erfasst wird.

4. Verfahren nach einem der Ansprüche 1 oder 2, **dadurch gekennzeichnet, dass** mit der optischen Umlenkeinrichtung (9) ein Bereich, welcher im Wesentlichen einer Ausdehnung eines größtmöglichen Bauteiles (6) entspricht, erfasst wird.

5. Verfahren nach einem der Ansprüche 1 bis 2, **dadurch gekennzeichnet, dass** die mindestens eine optische Umlenkeinrichtung (9) in Form mindestens eines Spiegels (10) und/oder mindestens eines optischen Prismas (11) ausgebildet wird.

6. Verfahren nach einem der Ansprüche 1 bis 5, **dadurch gekennzeichnet, dass** die Überwachung direkt während des Druckvorganges und/oder in einem gesonderten Scanvorgang nach Beendigung eines schichtförmigen Auftrages (7) durchgeführt wird.

7. 3D-Drucker (1) zur Herstellung eines Bauteiles (6), wobei das Bauteil (6) durch schichtweises Ablegen eines Werkstoffes mittels eines beweglich angeordneten Druckkopfes (2) in Form eines Auftrages (7) herstellbar ist, wobei der 3D-Drucker (1) mindestens eine Kamera (8) zur optischen Überwachung des Auftrages (7) umfasst, wobei der 3D-Drucker (1) mindestens eine optische Umlenkeinrichtung (9) zur indirekten optischen Erfassung des Auftrages (7) durch die mindestens eine Kamera (8) umfasst, wobei die mindestens eine optische Umlenkeinrichtung (9) ortsfest am oder ortsfest zum Druckkopf (2) angeordnet ist, **dadurch gekennzeichnet, dass** die mindestens eine Kamera (8) ortsfest zu dem Bauteil (6) angeordnet ist, wobei mit der mindestens einen Kamera (8) ein so großer Erfassungsbereich erfassbar ist, so dass ein durch die optische Umlenkeinrichtung umgelenkter Lichtstrahl (12) auch bei Bewegung des Druckkopfes (2) erfassbar ist.

8. 3D-Drucker (1) nach Anspruch 7, **dadurch gekennzeichnet, dass** die mindestens eine optische Umlenkeinrichtung (9) als mindestens ein optischer Spiegel (10) und/oder als mindestens ein optisches Prisma (11) ausgestaltet ist.

9. 3D-Drucker (1) nach einem der Ansprüche 7 bis 8, **dadurch gekennzeichnet, dass** der 3D-Drucker (1) zur Ausführung eines Verfahrens nach einem der Ansprüche 1 bis 6 ausgestaltet ist.

## Claims

1. A method for optically monitoring a component (6) produced by means of a 3D printing process, wherein, during the 3D printing process, a material is deposited in layers by means of at least one movably arranged print head (2) as an application (7) on the component (6), which is in the making, wherein the application (7) is optically detected by means of at least one camera (8) and is compared to a geometric target specification, wherein the application (7) is detected by the at least one camera (8) by means of at least one optical deflecting means (9), wherein the at least one optical deflecting means (9) is arranged in such a way that it assumes a defined position, which is invariable during a printing and/or scanning process, to the print head (2) and is arranged for performing a relative movement with respect to the component (6), **characterized in that** the at least one camera (8) is arranged in a stationary manner to the component (6), and wherein a detection region is detected by means of the at least one camera (8), which is so large that a light beam (12) deflected by the optical deflecting means can be detected even during movement of the print head (2).

2. The method according to claim 1, **characterized in that** the application (7) is detected by means of at least one camera (8), which is positioned above and/or obliquely above and/or laterally of the component (6).

3. The method according to one of claims 1 or 2, **characterized in that** a region, which corresponds at least to a smallest expansion of the application (7), is detected by means of the optical deflecting means (9) .

4. The method according to one of claims 1 or 2, **characterized in that** a region, which essentially corresponds to an expansion of a largest possible component (6), is detected by means of the optical deflecting means (9).

5. The method according to one of claims 1 to 2, **characterized in that** the at least one optical deflecting means (9) is formed in the shape of at least one mirror (10) and/or of at least one optical prism (11) .

6. The method according to one of claims 1 to 5, **characterized in that** the monitoring is performed directly during the printing process and/or in a separate scanning process upon completion of an application (7) in layers.

7. A 3D printer (1) for producing a component (6), wherein the component (6) can be produced in the form of an application (7) by means of depositing a material in layers by means of a movably arranged print head (2), wherein the 3D printer (1) comprises at least one camera (8) for optically monitoring the application (7), wherein the 3D printer (1) comprises at least one optical deflecting means (9) for the indirect optical detection of the application (7) by means of the at least one camera (8), wherein the at least one optical deflecting means (9) is arranged in a stationary manner on or in a stationary manner to the print head (2), **characterized in that** the at least one camera (8) is arranged in a stationary manner to the component (6), wherein a detection region can be detected by means of the at least one camera (8), which is so large that a light beam (12) deflected by the optical deflecting means can be detected even during movement of the print head (2)

8. The 3D printer (1) according to claim 7, **characterized in that** the at least one optical deflecting means (9) is designed as at least one optical mirror (10) and/or as at least one optical prism (11).

9. The 3D printer (1) according to one of claims 7 to 8, **characterized in that** the 3D printer (1) is designed for carrying out a method according to one of claims 1 to 6.

## Revendications

1. Procédé de surveillance optique d'une pièce de construction (6) fabriquée au moyen d'un procédé d'impression 3D, dans lequel, dans le procédé d'impression 3D, un matériau est déposé par couches au moyen d'au moins une tête d'impression disposée de manière mobile (2) sous forme d'une application (7) sur la pièce de construction en cours de création (6), l'application (7) étant enregistrée optiquement au moyen d'une caméra (8) et comparée avec une prescription théorique géométrique, l'application (7) étant enregistrée par l'au moins une caméra (8) au moyen d'au moins un dispositif de déviation optique (9), l'au moins un dispositif de déviation optique (9) étant disposé de manière à ce que celui-ci prenne une position définie inchangée pendant un processus d'impression ou de balayage par rapport à la tête d'impression (2) et soit conçu pour exécuter un mouvement relatif par rapport à la pièce de construction (6), **caractérisé en ce que** l'au moins une caméra (8) est disposée à emplacement fixe par rapport à la pièce de construction (6) et qu'une zone d'enregistrement suffisamment grande est enregistrée avec l'au moins une caméra (8) pour qu'un rayon lumineux (12) dévié par le dispositif de déviation optique puisse être enregistré même en cas de mouvement de la tête d'impression (2).

2. Procédé selon la revendication 1, **caractérisé en ce que** l'application (7) est enregistrée par au moins une caméra (8) qui est positionnée au-dessus et/ou obliquement au-dessus et/ou latéralement par rapport à la pièce de construction (6).

3. Procédé selon une des revendications 1 ou 2, **caractérisé en ce qu'**une zone qui correspond à au moins une extension minimale de l'application (7) est enregistrée avec le dispositif de déviation optique (9).

4. Procédé selon une des revendications 1 ou 2, **caractérisé en ce qu'**une zone qui correspond sensiblement à une extension d'une pièce de construction de taille maximale (6) est enregistrée avec le dispositif de déviation optique (9).

5. Procédé selon une des revendications 1 à 2, **caractérisé en ce que** l'au moins un dispositif de déviation optique (9) est réalisé sous forme d'au moins un miroir (10) et/ou d'au moins un prisme optique (11).

6. Procédé selon une des revendications 1 à 5, **caractérisé en ce que** la surveillance est réalisée directement pendant le processus d'impression et/ou dans un processus de balayage spécifique à la fin d'une application sous forme de couches (7).

7. Imprimante 3D (1) pour la fabrication d'une pièce de construction (6), la pièce de construction (6) pouvant être fabriquée par dépôt en couches d'un matériau au moyen d'une tête d'impression (2) disposée de manière mobile sous forme d'une application (7), l'imprimante 3D (1) comprenant au moins une caméra (8) pour la surveillance optique de l'application (7), l'imprimante 3D (1) comprenant au moins un dispositif de déviation optique (9) pour l'enregistrement optique indirect de l'application (7) par l'au moins une caméra (8), l'au moins un dispositif de déviation optique (9) étant disposé à emplacement fixe ou à emplacement fixe par rapport à la tête d'impression (2), **caractérisé en ce que** l'au moins une caméra (8) est disposée à emplacement fixe par rapport à la pièce de construction (6), une zone d'enregistrement assez grande pour qu'un rayon lumineux (12) dévié par le dispositif de déviation optique puisse être dévié par le dispositif de déviation éthique pouvant être enregistrée au moins de l'au moins une caméra (8) même en cas de mouvement de la tête d'impression (2).

8. Imprimante 3D (1) selon la revendication 7, **caractérisée en ce que** l'au moins un dispositif de déviation optique (9) est réalisé sous forme d'au moins un miroir optique (10) et/ou sous forme d'au moins un prisme optique (11).

9. Imprimante 3D (1) selon une des revendications 7 à 8, **caractérisée en ce que** l'imprimante 3D (1) est conçue pour exécuter un procédé selon une des revendications 1 à 6.
